# EUROPÄISCHE PATENTSCHRIFT

(11) **EP 2 875 324 B1**
(45) Veröffentlichungstag und Bekanntmachung des Hinweises auf die Patenterteilung: **21.06.2017**
(21) Anmeldenummer: 14704788.0
(22) Anmeldetag: 14.02.2014
(51) Int. Cl.: G01K 1/12, G01K 7/04

(54) **TEMPERATURFÜHLER FÜR SCHNELLE TEMPERATURWECHSEL**
TEMPERATURE SENSOR FOR RAPID TEMPERATURE CHANGES
SONDE THERMIQUE POUR CHANGEMENTS DE TEMPÉRATURE RAPIDES

(30) Priorität: 18.02.2013 DE 202013100708 U
(43) Veröffentlichungstag der Anmeldung: 27.05.2015
(73) Patentinhaber: AB Elektronik Sachsen GmbH, 01774 Klingenberg (DE)
(72) Erfinder: IRRGANG, Klaus, 98716 Geraberg (DE)
(74) Vertreter: Liedtke, Klaus
(86) Internationale Anmeldenummer: PCT/EP2014/052935
(87) Internationale Veröffentlichungsnummer: WO 2014/125078

(56) Entgegenhaltungen:
- DE-A1-102011 008 179
- DE-A1-102011 083 437
- DE-B3-102006 034 248
- DE-C1- 10 106 475
- DE-U1-202012 104 929

## Beschreibung

Die Erfindung betrifft einen thermoelektrischen Hochtemperaturfühler mit inneren Thermoleitern, die zu einer Thermoperle verschweißt sind, welche sich in einer Messspitze befindet.

Es handelt sich um einen relativ kurzen Einbautemperaturfühler, welcher zur Temperaturerfassung in kompakten Strömungsmaschinen sowie in Diesel- und Benzinmotoren geeignet ist.

Aus dem Stand der Technik sind vielfältige Ausführungen von Temperaturfühlern bekannt, welche für einen Einsatz bei derartig hohen Temperaturen vorgesehen sind. Die Temperaturfühler sind hinsichtlich der Art und der Anzahl der verwendeten Temperatursensoren und hinsichtlich der Konstruktion und Technologie unterscheidbar.

Aus DE 40 21 997 C2 ist ein als Hochtemperaturthermistor ausgebildeter Temperaturfühler beschrieben, der im Inneren eines temperaturbeständigen Metallrohres angeordnet ist und der aus einem vorgegebenen Gemisch zur Ausbildung einer Keramik besteht, so dass ein gewisses Änderungsmaß eines Widerstandes gegenüber einem Anfangswiderstand innerhalb der vorgegebenen Grenzen liegt.

Weiterhin wird in DE 198 061 10 C2 ein Abgassensor beschrieben, der ein temperaturempfindliches Messelement aus einem Keramiksubstrat enthält, auf dem eine Platin-Widerstandszuleitung und Kontakt-Pads ausgebildet sind. Mit den Kontakt-Pads ist ein Kabelanschluss direkt verbunden.

Aus DE 10 2006 034 248 B3 ist eine Messanordnung mit einem elektrischen Messwiderstand bekannt, in dem ein Füllstoff in einem Schutzrohr angeordnet ist.

Die Füllstoffanordnung bzw. eine Ausbildung einer Dichte des Füllstoffes längs des Schutzrohres weist einen Gradienten auf, wobei die Dichte des Füllstoffes an einer Position ein Maximum besitzt, an dem das Schutzrohr eine Engstelle aufweist.

Ferner sind aus DE 10 2004 007 906 A1 Hochtemperatursensoren bekannt, die eine keramisch isolierte Fassungsisolation aufweisen und bei denen ein unteres Ende eines Fassungselementes derart ausgebildet ist, dass sich im Inneren ein Platindünnschichtsensor ausbildet.

Die oben genannten Ausführungen weisen im Dauereinsatz bei Temperaturen von 1.200°C und mehr eine geringe Lebensdauer sowie eine hohe Sensordrift auf.

Die US 4,865,462 A offenbart ein Thermoelement, bei welchem ein inneres Mantelthermoelement durch ein äußeres perforiertes Schutzrohr geschützt wird. Nachteilig erweist sich bei dieser Anordnung, dass die Schweißnaht im Heißstrombereich liegt und damit ein besonders hohes Gefährdungspotential aufweist.

US 5,662,418 A offenbart einen Temperaturfühler, der ein inneres Mantelthermoelement umfasst, welches mittels eines äußeren Schutzrohres mechanisch stabilisiert ist. Das Schutzrohr ist seitlich aufgefräst und weist offene, der Strömung zugewandte Abschnitte auf. Die Anordnung weist zwar eine hohe Stabilisierung durch den Schutz des Elementes bis in die Spitze auf, jedoch ist die Ausbildung des Schutzteils so massiv, dass erhebliche messdynamische Nachteile entstehen.

Des Weiteren offenbart DE 41 38 460 A1 ein gekapseltes Thermoelement, welches eine äußere keramische Hülle aufweist. Zwischen einem Prozessrand und einer Fühlerfassung ist ein Kittrand angeordnet. Die gesamte Anordnung ist nicht ausgelegt für Messgasanströmungen mit mittleren Strömungsstärken, sondern wegen der Durchlässigkeit des Rohres für Hochtemperaturstrahlungsmessungen geeignet.

Aus US 4,485,263 A ist ein Temperaturfühler bekannt, bei welchem ein stark abgehämmertes Mantelthermoelement mit einer separaten Halbschale stumpf verschweißt wird. Um das fertige Mantelthermoelement ist ein Schutzrohr gezogen, welches eine Perforation aufweist.

Die DE 10 2004 007 906 A1 beschreibt einen Temperaturfühler, der eine Innenbohrung aufweist, in welcher Thermodrähte angeordnet sind. Die Thermodrähte sind medienseitig verschweißt und am hinteren Ende mit elektrischen Anschlüssen ausgebildet. Um dieses freie Thermoelement ist ein perforiertes Schutzrohr gezogen.

Aus DE 20 2008 016 201 U1 ist ein Hochtemperaturfühler bekannt, der ein speziell verformtes Mantelthermoelement aufweist. Die Verformung betrifft eine Messspitze, welche im Inneren eine Temperaturmessperle enthält und welche nach einer Pulverdichtung mit einem speziellen Boden verschließbar ist. Um die Zuverlässigkeit der Bodenschweißung zu erhöhen, ist der Boden formschlüssig und/oder konisch gestaltet und abgehämmert.

DE 10 2008 060 033 A1 beschreibt einen Temperaturfühler, bei dem ein Sensorelement aus einer Thermodrahtperle besteht, welche aus einer Mantelleitung herausragt und von einer Schutzhülse, welche auf einem dem Medium zugewandten Ende der Mantelleitung befestigt ist, umgeben ist. Die Schutzhülse ist einteilig und weist keine Schweißstelle auf.

Weiterhin ist die DE 10 2011 834 37 A1 bekannt, die ebenso wie die DE 10 2008 060 033 A1, die DE 199 46 453 und die US 4,865,462 A die Messperle durch eine metallische Schutzhülle aus einem Tiefziehteil schützt. Die Schweißnaht an der Schutzhülse liegt im Medium, wird jedoch durch eine Schutzhülle von Strömungsangriffen geschützt und enthält des weiteren Bornitrid.

Ferner ist in DE 20 2012 104 929 U1 ein thermoelektrischer Hochtemperaturfühler beschrieben, bei dem sich innerhalb der Schutzrohre (hier als Stauchteile bezeichnet) eine Mantelleitung befindet. Die Mantelleitung besteht aus einem Mantelrohr, in dem sich in einem festen Verbund innere Thermoleiter und eine Pulverfüllung befinden. Die Thermoleiter ragen an der dem Messmedium zugewandten Seite aus dem Ende der Mantelleitung heraus und sind zu einer Thermoperle verschweißt. Die Thermoperle ist von einer kurzen, Schutzkappe umgeben. In dieser befindet sich ein gut wärmeleitendes Keramikpulver aus Bornitrid. Die Schutzkappe ist mit der Mantelleitung durch eine Schweißnaht verbunden. Die Mantelleitung und die Schutzkappe sind von unten offenen Schutzrohren umgeben.

DE 10 2011 083 437 A1 beschreibt einen thermoelektrischen Temperaturfühler mit einem Thermoelement, einer Mantelleitung mit Thermoleitern, welche an einer Messseite zu einer temperatursensitiven Thermoperle verschweißt sind und an der Messseite von einem Schutzelement umgeben sind, wobei in dem Schutzelement ein aus Keramik gebildetes Schalenelement angeordnet ist, welches eine zu der Thermoperle korrespondierende Aussparung aufweist, in welche die Thermoperle zumindest teilweise hineinragt.

DE 101 06 475 C1 beschreibt eine Temperatursensoranordnung mit einer Messsonde, die einen elektrischen Temperatursensor enthält, der sich am Ende einer Kapillare befindet, welche als einseitig geschlossenes AlSi-Rohr ausgebildet ist. Darüber ist ein Schutzrohr aus Bornit gestülpt, welches wiederum von einem Schutzrohr aus glasartigem Kohlenstoff umgeben ist.

DE 10 2011 008 179 A1 beschreibt einen Temperaturfühler mit einem elektronischen Temperaturfühler, der an Sensorleitungen angeschlossen ist und in ein keramisches Wärmeleitmaterial eigebettet ist, welches Bornit oder ein Bornit enthaltendes Komposit enthält.

In DE 10 2006 034 248 B3 ist ein Temperaturfühler für ein Widerstandsthermometer, insbesondere zur Verwendung im Abgasstrang von Verbrennungsmotoren, beschrieben. Der Temperaturfühler verwendet einen elektrischen Messwiderstand. Er verfügt über ein einteiliges Schutzrohr mit einer geschlossenen Spitze und einem elektrisch isolierendem Füllstoff aus keramischen oder mineralischen Material, der den Raum zwischen Messwiderstand und dem Schutzrohr ausfüllt.

Alle in den bekannten Schutzrechten beschriebenen Ausführungen berücksichtigen den Schwingungsangriff im herausragenden Teil nicht genügend, weshalb dieser Bereich ein ungünstiges Masse-Volumen-Verhalten aufweist oder für einen Einsatz in einem Kompaktaggregat zu lang und deshalb nicht geeignet ist.

Bei den letztgenannten Hochleistungsthermoelementen werden zwar medienberührende Schweißnähte durch die Verwendung von Tiefziehhülsen als Messspitzen vermieden, diese Anordnungen enthalten jedoch Thermo-Mantelleitungen, die zwar robust und schwingungsstabil sind, aber ein Misfit (d. h. unterschiedliche Temperaturausdehnungsbeiwerte) zwischen den Thermodrähten und dem Außenmantel der Mantelleitung aufweisen. Die durch die Herstellungstechnologie bedingt feste Verpulverung führt zu Zwangsdehnungen durch Stauchungen der inneren Thermodrähte, was bei schnellen Temperaturänderungen zu Drahteinschnürungen und Rissen führt.

Der Erfindung liegt die Aufgabe zugrunde, einen gegenüber dem Stand der Technik verbesserten thermoelektrischen Temperaturfühler anzugeben, welcher auch bei Temperaturen von bis zu 1.250°C verwendbar ist, zur Erfassung besonders schneller Temperaturmessänderungen geeignet ist, eine geringe Ausfallrate aufweist sowie mit kurzen Kabelabgangslängen gefertigt werden kann.

Die Aufgabe wird erfindungsgemäß durch eine Anordnung gelöst, welche die im Anspruch 1 angegebenen Merkmale aufweist.

Vorteilhafte Ausgestaltungen der Erfindung sind Gegenstand der Unteransprüche.

Im Gegensatz zu den zurzeit üblichen Thermoelementkonstruktionen, die für Turbolader oder Abgasstränge verwendet werden und als Hauptbestandteil ein Thermomantelleitungsstück enthalten, werden bei der vorliegenden Anordnung Einzeldrähte oder Drahtlitzen verwendet. Vorteilhafterweise sind die Einzeldrähte bzw. Drahtlitzen isoliert, beispielsweise mit einer keramischen Hochleistungsbeschichtung oder mit einer die Thermoperle umschließenden Keramikkappe und Mehrlochkapillaren. Zur Führung und Lagefixierung sind die Einzeldrähte oder Drahtlitzen noch von einer gemeinsamen Keramikhülse umgeben. Im hinteren Teil, welches nicht den heißen Beanspruchungen ausgesetzt ist, sind die Thermodrähte in Glaslot eingeschmolzen und/oder mit Hochleistungskleber vergossen. Der Fühlermantel bzw. die Fühlerarmatur besteht aus zwei Teilen sowie einer Übergangshülse am Kabelanschluss.

Vorzugsweise ist in der Armatur ein gut wärmeleitendes Keramikpulver, z. B. aus Bornitrid oder Aluminiumoxid, angeordnet. Beide Teile der Armatur sind miteinander verschweißt, wobei sich die Schweißnaht vorzugsweise an einem Stauchrand außerhalb des Messmediums befindet.

Gegenüber den bekannten Lösungen zeichnet sich der erfindungsgemäße Temperaturfühler aufgrund der Ausbildung und Anordnung der Schutzelemente durch einen verbesserten Schutz vor Beanspruchungen und durch besonders schnelle Temperaturwechsel im Heißgasmedium aus, wodurch eine hohe Lebensdauer und Langstabilität des Temperaturfühlers gewährleistet wird. Damit können Drifterscheinungen des Temperaturfühlers weitestgehend vermieden werden. Der Temperaturfühler ist zur Verwendung bei Temperaturen von bis zu 1.250°C bei Temperatursprüngen von bis zu 500 K/s oder mehr verwendbar.

Selbst bei vorteilhafter Materialwahl entstehen auch im dynamischen Belastungsfall Misfitsituationen. Durch die vorteilhafte relative Bezugspunktgestaltung zwischen Außenhülle und Thermodrähten und den Einsatz unterschiedlicher Keramikpulver wird der vorliegende Misfit zwischen Innendrähten und Außenmantel abgemindert und Zug- bzw. Stauchbelastungen der sensitiven Thermodrähte im schädigendem Ausmaß vermieden.

Die vordere Schutzhülse enthält am medienseitigen Ende einen Bereich, in dem sich eine erhöhte Pulververdichtung oder ein keramisches Abstandsteil befindet. Damit wird die Thermoperle in ihrer Lage fixiert und ein guter Wärmeübergang gewährleistet.

Eine vorteilhafte Ausführung sieht vor, dass die vordere Schutzhülle am medienseitigen Ende einen verjüngten Bereich enthält, sodass sich ein geringer Abstand zwischen Thermoperle und Schutzarmatur ergibt, was ebenfalls zum besseren Wärmeübergang von der Schutzarmatur zur Thermoperle beiträgt und damit ein schnelles Ansprechen des Temperaturfühlers erreicht wird.

Vorteilhaft ist es dabei keramische Mehrlochkapillaren mit unterschiedlichen Durchmessern zu verwenden, wobei die Thermodrähte eine stufenförmigen Versatz und im vorderen Bereich einen geringeren Abstand aufweisen.

Eine weitere vorteilhafte Ausführung sieht vor, dass als Thermodrähte zwei Einzelleiter verwendet werden, die im vorderen Teil vollständig keramisch isoliert sind und im hinteren, äußeren freiliegenden Teil mit einer hinteren Schutzhülse aus temperaturbeständigen Kunststoff, vorzugsweise Teflon, umhüllt sind.

Es ist auch möglich, dass als Thermodrähte Thermolitzen verwendet werden, wodurch die Widerstandsfähigkeit gegen mechanische Beanspruchungen weiter verbessert werden kann.

Ausführungsbeispiele der Erfindung werden im Folgenden anhand von Zeichnungen näher erläutert.

Darin zeigen:
- Figur 1: einen Schnitt durch einen Hochtemperaturfühler mit Stülprohr als Prozessanschluss,
- Figur 2: einen Schnitt durch einen Hochtemperaturfühler mit Stumpfbund als Prozessanschluss,
- Figur 3: den Innenaufbau eines Hochtemperaturfühlers gemäß Figur 1 und 2,
- Figur 4: einen Schnitt durch einen Hochtemperaturfühler mit unisolierten Thermolitzen,
- Figur 5: einen Schnitt durch einen Hochtemperaturfühler gemäß Figur 4 mit spezieller Messstelle und
- Figur 6: einen Schnitt durch eine Ausführung mit mehreren Mehrlochkapillaren und keramischem Abstandskörper.

Einander entsprechende Teile sind in allen Figuren mit den gleichen Bezugszeichen versehen.

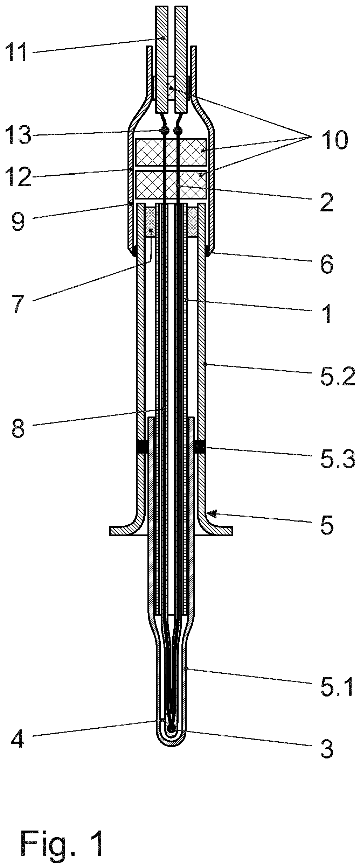

**Figur 1** zeigt einen Schnitt durch eine erste Ausführungsform. Im Inneren des Temperaturfühlers verlaufen zwei Thermodrähte 2. Im oberen Bereich sind diese unisoliert und an den Verbindungsstellen 13 mit isolierten Einzelanschlussleitungen 11 verschweißt. Dieser Bereich ist von einer Übergangshülse 9 umschlossen und enthält zwei Gummidichtungsteile 10, die eine Abdichtung bewirken und einen Abstand der unisolierten Thermodrähte 2 gewährleisten. Mittels einer Quetschstelle 12 werden die Gummidichtungsteile 10 in einer definierten Lage fixiert. Die Übergangshülse 9 ist durch die obere Schweißnaht 6 mit der hinteren Schutzhülse 5.2 gasdicht verbunden. Unterhalb dieses Bereichs sind die Thermodrähte 2 jeweils von einer hitzebeständigen Thermodrahtisolation 8 umgeben und am unteren Ende zu einer Thermoperle 3 verschweißt. Beide Thermodrähte 2 verlaufen in einer Isolierhülse 1 aus Keramik. Der hintere Teil des Temperaturfühlers, welcher nicht den heißen Beanspruchungen ausgesetzt ist, ist vom vorderen Teil durch eine Schicht aus Glaslot 7 getrennt, in der die Thermodrähte 2 eingeschmolzen sind. Der äußere metallische Fühlermantel wird von einer Schutzarmatur 5 und der sich daran anschließenden Übergangshülse 9 gebildet. Die Schutzarmatur 5 besteht aus einer vorderen Schutzhülse 5.1 und einer hinteren Schutzhülse 5.2, die miteinander durch die untere Schweißnaht 5.3 dicht verbunden sind. Die untere Schweißnaht 5.3 ist als Durchgangsschweißnaht ausgebildet. Vorzugsweise ist in der Armatur ein gut wärmeleitendes Keramikpulver 4, z. B. aus Bornitrid, angeordnet. Bei der hier dargestellten Ausführungsform ist die vordere Schutzhülse 5.1 im vordersten Bereich, der die Thermoperle 3 enthält, verjüngt. In diesem Bereich ist das sich darin befindende Keramikpulver 4 stark verdichtet. Damit wird eine erhöhte Wärmeleitfähigkeit und eine sichere Lagefixierung der Thermoperle 3 bewirkt. Die Isolierhülse 1 befindet sich oberhalb dieses Bereichs.

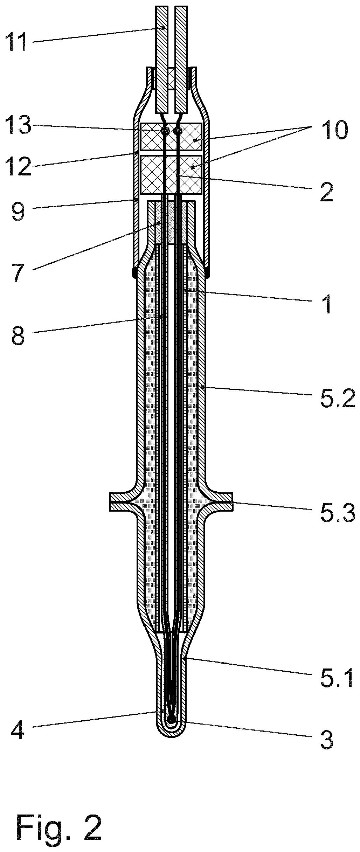

In **Figur 2** ist eine Ausführungsform dargestellt, bei der die vordere Schutzhülse 5.1 und die hintere Schutzhülse 5.2 jeweils umgebördelte Enden aufweisen, die einen Stumpfbund bilden, der als Prozessanschluss dient. Die Schutzhülsen 5.1 und 5.2 sind miteinander verschweißt, wobei sich die untere Schweißnaht 5.3 an einem Stauchrand außerhalb des Messmediums befindet.

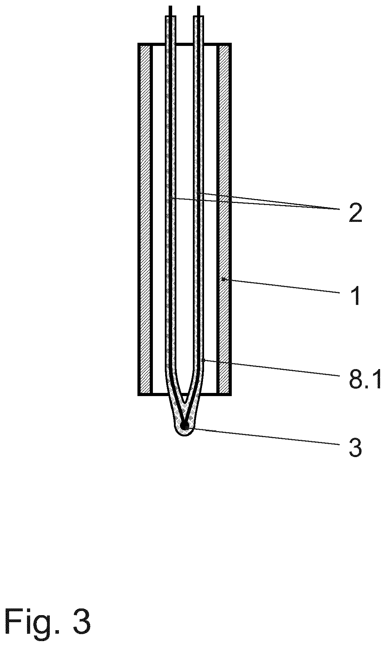

**Figur 3** erläutert den Innenaufbau des Hochtemperaturfühlers. Innerhalb der keramischen Isolierhülse 1 verlaufen beabstandet die von einer keramischen Thermodrahtisolation 8 umgebenen Thermodrähte 2, die am unteren Ende zur Thermoperle 3 verschweißt sind. Die Thermodrähte 2 bestehen aus unterschiedlichem Material, wobei ein Draht aus einer vorwiegend Ni-basierten und der andere Draht aus einer vorwiegend NiCr-basierten Metalllegierung bestehen.

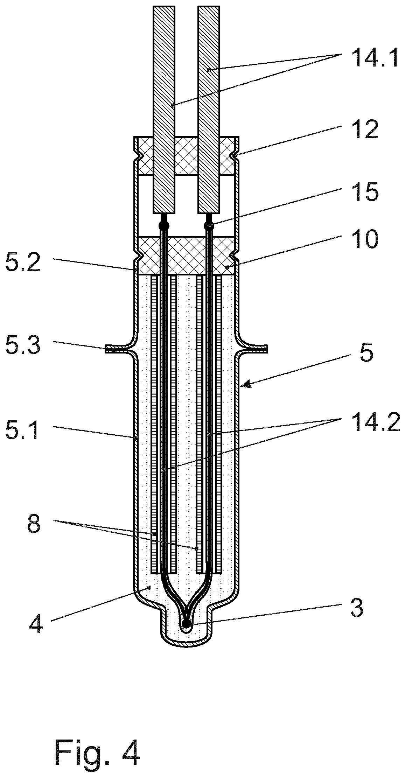

**Figur 4** zeigt den Aufbau des Hochtemperaturfühlers unter Verwendung von thermoelektrischen Litzen, die bis in die Spitze der vorderen Schutzhülse 5.1 reichen. Die thermoelektrischen Litzen sind am vorderen, dem Messmedium zugewandten Ende der hinteren Schutzhülse 5.2 zu einer Thermoperle 3 verschweißt. Am hinteren Ende der Schutzarmatur 5 ragen die nicht isolierten Thermolitzen 14.2 heraus. Sie werden durch Gummidichtungsteile 10 fixiert. Mit Quetschstellen 12 ist die hintere Schutzhülse 5.2 mit den Gummiteilen 10 verquetscht und bilden eine Abdichtung. Innerhalb der Schutzarmatur 5 sind die Kunststoffumspritzungen von den nicht isolierten Thermolitzen 14.2 entfernt. Die nicht isolierten Thermolitzen 14.2 sind am vorderen Ende verschweißt. Im verbleibenden Zwischenteil sind die nicht isolierten Thermolitzen 14.2 von einer Thermodrahtisolation 8 umgeben. Der Innenraum der Schutzarmatur 5 ist mit Keramikpulver 4 ausgefüllt.

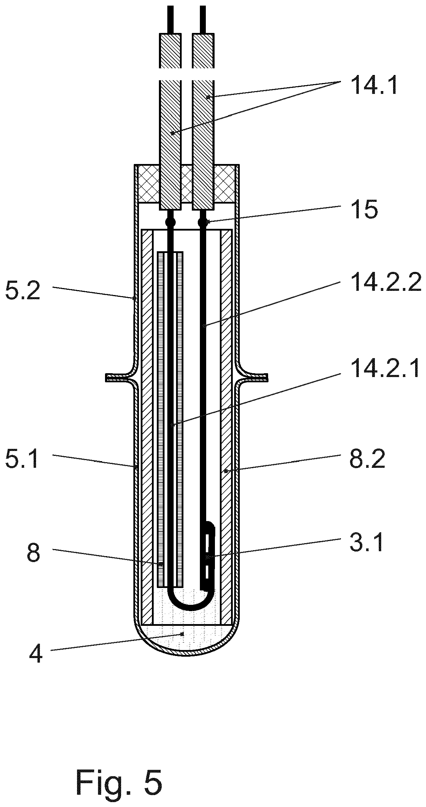

In **Figur 5** ist eine spezielle Ausbildung der Messstelle dargestellt. Die Messstelle ist hier in Form einer Überlappungsperle 3.1 ausgebildet. Die Messstelle wird hierbei von übereinander gelegten und miteinander verschweißten nicht isolierten Thermolitzen 14.2 gebildet. Die beiden nicht isolierten Thermolitzen 14.2.1 und 14.2.2 sind an ihrer Verbindungsstelle parallel zusammengelegt und miteinander zur Überlappungsperle 3.1 verschweißt. Eine erste nicht isolierte Thermolitze 14.2.1 befindet sich in der Thermodrahtisolation 8 und ist an der unteren Austrittsstelle um 180 Grad umgebogen und mit der zweiten nicht isolierten Thermolitze 14.2.2 verschweißt. Eine gemeinsame Isolation mittels einer äußeren Keramikhülse 8.2 bewirkt die elektrische Isolation der gesamten Thermolitzenanordnung. Der Innenraum ist mit Keramikpulver 4 gefüllt. Im hinteren Teil bleiben die Thermolitzen kunststoff- vorzugsweise teflonisoliert und werden an der Übergangsstelle der Hülse mit Gummidichtungsteilen 10 (sogenannten Sils) abgedichtet. An der Übergangstelle zwischen den kunststoffisolierten Litzen 14.1 zu den nichtisolierten Thermolitzen 14.2 befindet sich eine Litzenverschweißung 15, welche die Einzeladern der Litzen miteinander verbindet. Alternativ kann diese Verbindung auch durch Löten erfolgen.

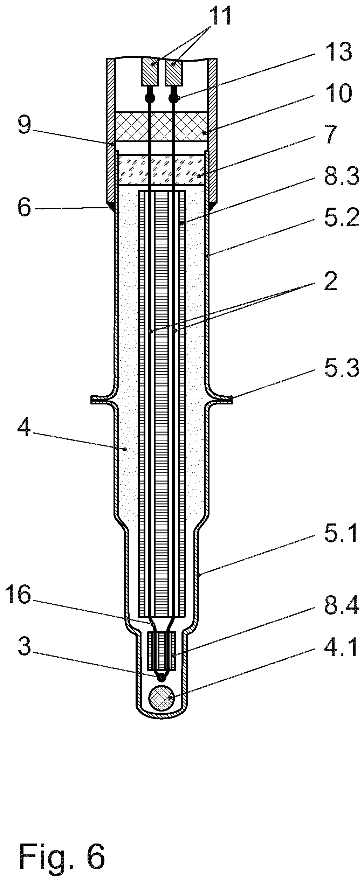

**Figur 6** erläutert eine Ausführung bei der die keramische Isolierung durch eine obere keramische Mehrlochkapillare 8.3 und eine untere keramische Mehrlochkapillare 8.4 gebildet wird. Die obere keramische Mehrlochkapillare 8.3 weist einen größeren Außendurchmesser als die untere keramische Mehrlochkapillare 8.4, sodass die Thermodrähte 2 an der Übergangsstelle zwischen der oberen Mehrlochkapillare 8.3 und der unteren Mehrlochkapillare 8.4 einen stufenförmigen Versatz 16 aufweisen. Die keramischen Mehrlochkapillaren 8.3 und 8.4 enthalten vorzugsweise zwei, können aber auch eine Vielzahl von Kapillaren enthalten. Der Abstand zwischen der Thermoperle 3 und dem Boden der vorderen Schutzhülse 5.1 wird durch ein keramisches Abstandsstück 4.1 realisiert, welches in der abgebildeten Ausführung als Kugel ausgebildet ist. Der Raum zwischen der oberen keramischen Mehrlochkapillare 8.3 und der Schutzarmatur 5 ist mit einer Pulverfüllung versehen, die vorzugsweise aus Bornitrid oder Aluminiumoxid besteht.

Die vordere Schutzhülse 5.1 weist am medienseitigen Ende einen verjüngten Bereich auf.

### BEZUGSZEICHENLISTE

- 1: Isolierhülse
- 2: Thermodrähte
- 3: Thermoperle
- 3.1: Überlappungsperle
- 4: Keramikpulver
- 4.1: keramischer Abstandskörper
- 5: Schutzarmatur
- 5.1: vordere Schutzhülse
- 5.2: hintere Schutzhülse
- 5.3: untere Schweißnaht
- 6: obere Schweißnaht
- 7: Glaslot
- 8: Thermodrahtisolation
- 8.1: keramische Schichtisolation
- 8.2: äußere Keramikhülse
- 8.3: obere keramische Mehrlochkapillare
- 8.4: untere keramische Mehrlochkapillare
- 9: Übergangshülse
- 10: Gummidichtungsteil
- 11: isolierte Einzelanschlussleitung
- 12: Quetschstelle
- 13: Verbindungsstelle
- 14.1, 14.2: Thermolitze
- 14.1: kunststoffisoliertes Thermolitzenteil
- 14.2: nicht isoliertes Thermolitzenteil
- 14.2.1: erste nicht isolierte Thermolitze
- 14.2.2: zweite nicht isolierte Thermolitze
- 15: Litzenverschweißung
- 16: stufenförmiger Versatz

## Patentansprüche

1. Thermoelektrischer Hochtemperaturfühler mit inneren Thermodrähten (2), die zu einer Thermoperle (3) verschweißt sind, welche sich in einer Messspitze befindet, wobei
- der thermoelektrische Hochtemperaturfühler von einer tiefgezogenen Schutzarmatur (5) umschlossen ist, welche eine geschlossene vordere Schutzhülse (5.1) und eine hintere Schutzhülse (5.2) enthält, und eine Pulverfüllung enthält,
wobei die vordere Schutzhülse (5.1) und die hintere Schutzhülse (5.2) durch eine Schweißstelle (5.3) verbunden sind,
wobei das ober Ende der Anordnung mit Glaslot (7) verschlossen ist; **dadurch gekennzeichnet dass**,
die Schutzarmatur einen bundförmigen Prozessanschluss aufweist und die Schweissstelle sich oberhalb des bundförmigen Prozessanschlusses befindet,
- als Thermodrähte (2) ein vorwiegend Ni-basierter und ein vorwiegend NiCr-basierter Einzeldraht oder eine Einzellitze angeordnet ist, die zur Thermoperle (3) verschweißt sind,
- die Einzeldrähte oder Einzellitzen gegeneinander keramisch isoliert sind,
- die Thermodrähte (2) mit Thermodrahtisolationen (8) von einer keramischen Isolierhülse (1) umgeben sind und innerhalb der Schutzarmatur (5) mit einer oder mehreren keramischen Mehrlochkapillaren (8.3, 8.4) umgeben sind,
- und
- die vordere Schutzhülse (5.1) am medienseitigen Ende einen Bereich enthält, der eine erhöhte Pulververdichtung aufweist.

2. Hochtemperaturfühler nach Anspruch 1, **dadurch gekennzeichnet, dass** die vordere Schutzhülse (5.1) am medienseitigen Ende ein keramisches Abstandsteil enthält.

3. Hochtemperaturfühler nach Anspruch 2, **dadurch gekennzeichnet, dass** das keramische Abstandsteil eine Kugel ist.

4. Hochtemperaturfühler nach einem der vorhergehenden Ansprüche,
**dadurch gekennzeichnet, dass** die vordere Schutzhülse (5.1) am medienseitigen Ende einen verjüngten Bereich aufweist.

5. Hochtemperaturfühler nach einem der vorhergehenden Ansprüche,
**dadurch gekennzeichnet, dass** die Thermodrähte (2) aus vorgealtertem Draht bestehen.

6. Hochtemperaturfühler nach einem der vorhergehenden Ansprüche,
**dadurch gekennzeichnet, dass** die Thermodrähte (2) mit einer keramischen Thermodrahtisolation (8) versehen sind.

7. Hochtemperaturfühler nach einem der vorhergehenden Ansprüche,
**dadurch gekennzeichnet, dass** längs der Thermodrähte (2) Zonen unterschiedlicher keramischer Pulverfüllungen bestehen.

8. Hochtemperaturfühler nach einem der vorhergehenden Ansprüche,
**dadurch gekennzeichnet, dass** die Thermodrähte (2) einen stufenförmigen Versatz (16) aufweisen.

9. Hochtemperaturfühler nach einem der vorhergehenden Ansprüche,
**dadurch gekennzeichnet, dass** die Thermodrähte (2) mit wellenförmigen Ausbildungen oder mit Längsverdrillungen versehen sind.

10. Hochtemperaturfühler nach einem der vorhergehenden Ansprüche,
**dadurch gekennzeichnet, dass** als Thermodrähte (2) zwei Einzelleiter verwendet werden, die im vorderen Teil vollständig keramisch isoliert sind und im hinteren, äußeren freiliegenden Teil mit einer hinteren Schutzhülse aus temperaturbeständigen Kunststoff umhüllt sind.

11. Hochtemperaturfühler nach Anspruch 10,
**dadurch gekennzeichnet, dass** als temperaturbeständiger Kunststoff Teflon verwendet wird.

12. Hochtemperaturfühler nach einem der vorhergehenden Ansprüche,
**dadurch gekennzeichnet, dass** als Thermodrähte (2) Thermolitzen (14.1, 14.2) verwendet werden.

13. Hochtemperaturfühler nach einem der Ansprüche 10 bis 12,
**dadurch gekennzeichnet, dass** die Kunststoffumhüllungen an der Austrittsstelle der hinteren Schutzhülse (5.2) durch ein Gummidichtungsteil (10) geführt sind.

## Claims

1. Thermoelectric high-temperature sensor having inner thermocouple wires (2) which are welded to form a thermocouple bead (3) which is located in a measuring tip,
- the thermoelectric high temperature sensor being enclosed by a deep-drawn protective fitting (5), which contains a closed front protective sleeve (5.1) and a rear protective sleeve (5.2),
and containing a powder filling,
the front protective sleeve (5.1) and the rear protective sleeve (5.2) being connected by a weld (5.3),
the upper end of the arrangement being closed with glass solder (7);
**characterized in that**
the protective fitting has a collar-like process connection and the weld is located above the collar-like process connection,
- as thermocouple wires (2), a predominantly Ni-based and a predominantly NiCr-based individual wire or an individual stranded wire is arranged, which are welded to form the thermocouple bead (3),
- the individual wires or individual stranded wires are insulated ceramically relative to each other,
- the thermocouple wires (2) are surrounded by thermocouple wire insulation (8) made of a ceramic insulating sleeve (1) and, within the protective fitting (5), are surrounded by one or more ceramic multi-hole capillaries (8.3, 8.4),
- and
- the front protective sleeve (5.1) includes a region at the media-side end which has an increased powder compaction.

2. High-temperature sensor according to Claim 1, **characterized in that** the front protective sleeve (5.1) contains a ceramic spacer part at the media-side end.

3. High-temperature sensor according to Claim 2, **characterized in that** the ceramic spacer part is a sphere.

4. High-temperature sensor according to one of the preceding claims,
**characterized in that** the front protective sleeve (5.1) has a tapered region at the media-side end.

5. High-temperature sensor according to one of the preceding claims,
**characterized in that** the thermocouple wires (2) consist of pre-aged wire.

6. High-temperature sensor according to one of the preceding claims,
**characterized in that** the thermocouple wires (2) are provided with a ceramic thermocouple wire insulation (8).

7. High-temperature sensor according to one of the preceding claims,
**characterized in that** there are zones with different ceramic powder fillings along the thermocouple wires (2).

8. High-temperature sensor according to one of the preceding claims,
**characterized in that** the thermocouple wires (2) have a step-like offset (16).

9. High-temperature sensor according to one of the preceding claims,
**characterized in that** the thermocouple wires (2) are provided with wave-like formations or with longitudinal twists.

10. High-temperature sensor according to one of the preceding claims,
**characterized in that** two individual conductors are used as thermocouple wires (2), which are fully ceramically insulated in the front part and, in the rear, outer exposed part, are enveloped in a rear protective sheath of temperature-resistant plastic.

11. High-temperature sensor according to Claim 10,
**characterized in that** Teflon is used as the temperature-resistant plastic.

12. High-temperature sensor according to one of the preceding claims,
**characterized in that** stranded thermocouple wires (14.1, 14.2) are used as thermocouple wires (2).

13. High-temperature sensor according to one of Claims 10 to 12,
**characterized in that** the plastic sheaths are led through a rubber sealing part (10) at the outlet point from the rear protective sleeve (5.2).

## Revendications

1. Sonde de haute température thermoélectrique comprenant des fils thermoélectriques (2) internes qui sont soudés pour former une thermoperle (3), laquelle se trouve dans une pointe de mesure,
- la sonde de haute température thermoélectrique étant enfermée dans une armature protectrice (5) emboutie, laquelle contient un manchon protecteur avant (5.1) fermé et un manchon protecteur arrière (5.2),
et contenant une charge de poudre,
le manchon protecteur avant (5.1) et le manchon protecteur arrière (5.2) étant reliés par un point de soudure (5.3),
l'extrémité supérieure de l'arrangement étant fermée par une brasure de verre (7) ; **caractérisée en ce que**
l'armature protectrice possède une borne de processus en forme de collerette et le point de soudure se trouve au-dessus de la borne de processus en forme de collerette,
- les fils thermoélectriques (2) montés sont un fil individuel principalement à base de Ni et un autre fil individuel principalement à base de NiCr ou des brins individuels, lesquels sont soudés pour former la thermoperle (3),
- les fils individuels ou les brins individuels sont isolés les uns par rapport aux autres par de la céramique,
- les fils thermoélectriques (2) avec les isolants de fil thermoélectrique (8) sont entourés par un manchon isolant (1) en céramique et, à l'intérieur de l'armature protectrice (5), sont entourés par un ou plusieurs capillaires à trous multiples (8.3, 8.4) en céramique,
- et
- le manchon protecteur avant (5.1) contient au niveau de l'extrémité du côté du fluide une zone qui présente un compactage de poudre accru.

2. Sonde de haute température selon la revendication 1, **caractérisée en ce que** le manchon protecteur avant (5.1) contient au niveau de l'extrémité du côté du fluide une pièce d'espacement en céramique.

3. Sonde de haute température selon la revendication 2, **caractérisée en ce que** la pièce d'espacement en céramique est une bille.

4. Sonde de haute température selon l'une des revendications précédentes, **caractérisée en ce que** le manchon protecteur avant (5.1) présente au niveau de l'extrémité du côté du fluide une zone effilée.

5. Sonde de haute température selon l'une des revendications précédentes, **caractérisée en ce que** les fils thermoélectriques (2) se composent d'un fil pré-vieilli.

6. Sonde de haute température selon l'une des revendications précédentes, **caractérisée en ce que** les fils thermoélectriques (2) sont pourvus d'un isolant de fil thermoélectrique (8) en céramique.

7. Sonde de haute température selon l'une des revendications précédentes, **caractérisée en ce que** des zones ayant des charges de poudre de céramique différentes sont formées le long des fils thermoélectriques (2).

8. Sonde de haute température selon l'une des revendications précédentes, **caractérisée en ce que** les fils thermoélectriques (2) présentent un décalage (16) en gradins.

9. Sonde de haute température selon l'une des revendications précédentes, **caractérisée en ce que** les fils thermoélectriques (2) sont pourvus de configurations en forme d'ondes ou de torsions longitudinales.

10. Sonde de haute température selon l'une des revendications précédentes, **caractérisée en ce que** les fils thermoélectriques (2) utilisés sont des conducteurs individuels qui sont entièrement isolés par de la céramique dans la partie avant et, dans la partie arrière extérieure dégagée, sont enveloppés par un manchon protecteur arrière en matière plastique résistante à la température.

11. Sonde de haute température selon la revendication 10, **caractérisée en ce que** la matière plastique résistante à la température utilisée est du téflon.

12. Sonde de haute température selon l'une des revendications précédentes, **caractérisée en ce que** les fils thermoélectriques (2) utilisés sont des brins thermiques (14.1, 14.2).

13. Sonde de haute température selon l'une des revendications 10 à 12, **caractérisée en ce que** les enveloppes en matière plastique au niveau du point de sortie du manchon protecteur arrière (5.2) passent à travers une pièce d'étanchéité en caoutchouc (10).
